Europäisches Patentamt

European Patent Office

Office européen des brevets

(11) Numéro de publication: **0 360 694**
**A1**

(12) **DEMANDE DE BREVET EUROPEEN**

(21) Numéro de dépôt: 89402588.1

(51) Int. Cl.⁵: **B 64 G 1/44**

(22) Date de dépôt: 21.09.89

(30) Priorité: 22.09.88 FR 8812374

(43) Date de publication de la demande:
28.03.90 Bulletin 90/13

(84) Etats contractants désignés:
DE ES GB IT NL SE

(71) Demandeur: AEROSPATIALE Société Nationale
Industrielle
37, Boulevard de Montmorency
F-75781 Paris Cédex 16 (FR)

(72) Inventeur: Girard, Alain
Les Belles Terres 28 Chemin de Saint Laurent
F-06800 Cagnes sur Mer (FR)

(74) Mandataire: Mongrédien, André et al
c/o SOCIETE DE PROTECTION DES INVENTIONS 25, rue
de Ponthieu
F-75008 Paris (FR)

(54) Panneau articulé à verrouillage automatique en position déployée, notamment pour générateur solaire de satellite artificiel.

(57) Un panneau articulé (12) formé de deux éléments (14)
approximativement plans reliés entre eux par des charnières
(16) est réalisé de telle sorte que les axes des charnières, qui
sont rectilignes lorsque le panneau est replié et en cours de
déploiement, prennent une forme non rectiligne, par exemple
un arc de cercle, à la fin du déploiement. Le panneau est ainsi
verrouillé en position déployée. Avantageusement, la déformation des axes est obtenue en donnant aux éléments (14) une
cambrure naturelle au repos, cette cambrure étant annulée par
l'application d'une précontrainte lorsque le panneau est replié.
Un tel panneau peut notamment être un générateur solaire de
satellite artificiel.

FIG. 3

EP 0 360 694 A1

Bundesdruckerei Berlin

## Description

### Panneau articulé à verrouillage automatique en position déployée, notamment pour générateur solaire de satellite artificiel.

L'invention concerne un panneau articulé à verrouillage automatique en position déployée et s'applique avantageusement à un générateur solaire de satellite artificiel.

Les satellites artificiels utilisent très couramment des organes déployables comme des antennes ou des générateurs solaires, qui doivent être repliés contre le corps du satellite pendant le lancement, à cause du manque d'espace disponible sous la coiffe du lanceur. Sur la majorité des satellites actuels, ces organes déployables doivent être verrouillés en fin de course dans leur position déployée, pour garantir une position et/ou une rigidité voulue.

Sur les organes déployables existants, les articulations entre les différents éléments constituant ces organes sont généralement formées d'un ensemble complexe de pièces assurant séparément les fonctions d'articulation et de verrouillage.

Dans le document US-A-3 386 128, on a proposé de relier deux éléments d'un panneau articulé au moyen de plusieurs lames élastiques à section en arc de cercle, fixées sur les deux faces opposées de ces éléments. On réalise ainsi une articulation dans laquelle les lames élastiques appliquent entre les éléments un couple moteur qui tend à les déployer automatiquement. Les lames élastiques exercent en outre un effort de verrouillage entre les éléments qu'elles relient, lorsque le panneau se trouve en position déployée.

Cependant, dans une articulation de ce type, la taille des lames élastiques est limitée par construction, notamment afin de garantir l'application d'un couple moteur tout au long du déploiement du panneau. Par conséquent, le verrouillage du panneau déployé est toujours relativement faible. Dans certaines applications, ce système d'articulation ne peut donc pas être utilisé.

L'invention a précisément pour objet un panneau articulé à verrouillage automatique en position déployée, dont la structure est particulièrement simple et permet cependant d'obtenir un verrouillage en fin de course sensiblement plus efficace que le système à lames élastiques décrit dans le document US-A-3 386 128.

Selon l'invention, ce résultat est obtenu au moyen d'un panneau articulé, à verrouillage automatique en position déployée, comprenant au moins deux éléments approximativement plans reliés entre eux par une charnière définissant un axe de rotation entre les éléments, ce panneau étant caractérisé par le fait qu'il comprend des moyens de déformation aptes à donner audit axe, en fin de déploiement du panneau, une forme non rectiligne, irréversible sans intervention extérieure, alors que cet axe est rectiligne lorsque le panneau est replié et en cours de déploiement.

Lorsque le panneau est replié ainsi que lors de son déploiement, l'axe de rotation de la charnière est rectiligne. En revanche, cet axe prend une forme non linéaire, généralement en arc de cercle, à la fin du déploiement du panneau, sous l'action des moyens de déformation. Le panneau se trouve ainsi verrouillé dans sa position déployée, de façon irréversible sans intervention extérieure.

Selon un mode de réalisation préféré de l'invention, les moyens de déformation sont constitués par les éléments approximativement plans, qui présentent au repos une cambrure naturelle, cette cambrure étant annulée par déformation élastique desdits éléments lorsque le panneau est en position pliée. Le stockage des panneaux dans cette dernière position est assuré sous une précontrainte aplatissant les différents éléments qui le constituent.

Afin de relier mécaniquement les éléments adjacents du panneau, un organe de liaison souple tel qu'un ruban en matière flexible est fixé sur ces éléments, de façon à les relier d'une extrémité à l'autre de l'axe de rotation.

Le déploiement du panneau peut être assuré soit par des mouvements du satellite lors de sa mise sur orbite, soit par une motorisation quelconque, par exemple des ressorts de torsion ou des lames élastiques analogues à celles qui sont décrites dans le document US-A-3 386 128.

Avantageusement, le panneau selon l'invention est appliqué à la réalisation d'un générateur solaire déployable, approximativement plan.

Un exemple de réalisation de l'invention va à présent être décrit, à titre d'exemple nullement limitatif, en se référant aux dessins annexés dans lesquels :

   - la figure 1 est une vue en perspective représentant schématiquement un satellite artificiel équipé de deux générateurs solaires réalisés conformément à l'invention et représentés en position déployée ;

   - la figure 2 est une vue en perspective représentant à plus grande échelle l'un des générateurs solaires du satellite de la figure 1, en cours de déploiement ; et

   - la figure 3 est une vue comparable à la figure 2 représentant le générateur solaire en position déployée.

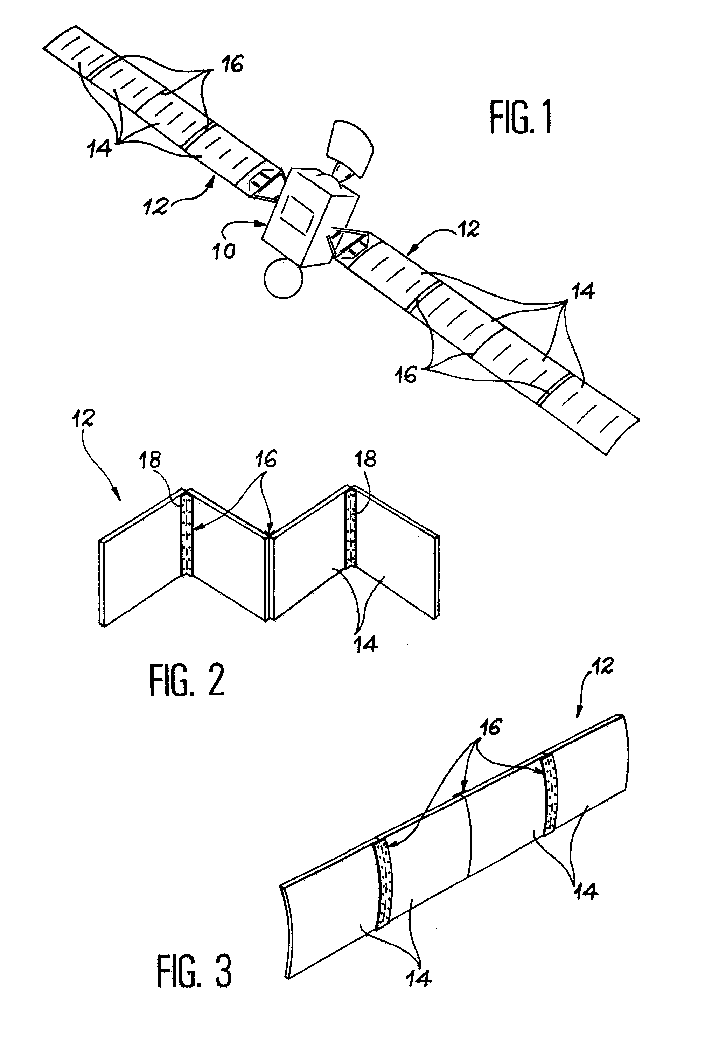

La figure 1 représente de façon très schématique un satellite artificiel comportant un corps 10 sur deux faces opposées duquel sont fixés deux générateurs solaires articulés 12. Chacun des générateurs solaires 12 comprend plusieurs éléments 14, approximativement plans, articulés deux à deux en accordéon par des charnières 16 définissant des axes de rotation entre les éléments 14 adjacents.

Dans l'exemple de réalisation représenté, chacun des générateurs solaires comprend quatre éléments 14 de même taille. Cependant, le nombre et la taille des éléments 14 peuvent être différents sans sortir du cadre de l'invention.

Conformément à l'invention et comme l'illustrent plus précisément les figures 2 et 3, chacun des générateurs solaires 12 est réalisé de telle sorte que les axes de rotation de chacune des charnières 16 prennent en fin de déploiement du panneau une forme non linéaire et plus précisément en arc de cercle (figure 3), alors que ces mêmes axes sont rectilignes lorsque le générateur est replié ou en cours de déploiement (figure 2).

Dans le mode de réalisation préféré de l'invention représenté, cette déformation des axes de rotation des articulations 16 en fin de déploiement des générateurs solaires est obtenue par une configuration particulière des éléments 14 constituant ces générateurs. Plus précisément, au lieu d'être parfaitement plans au repos comme c'est habituellement le cas, les éléments 14 présentent au repos une cambrure naturelle, illustrée schématiquement sur la figure 3. Cette cambrure, identique pour chacun des éléments 14, donne aux bords adjacents de ces éléments reliés par les charnières 16 une certaine courbure, qui peut être annulée par une déformation élastique des éléments 14 redonnant à chacun de ces éléments une forme plane.

Les éléments 14 du générateur selon selon l'invention peuvent notamment être réalisés en un matériau stratifié à base de fibres de Kevlar, de carbone ou de verre.

La liaison mécanique entre chacun des éléments 14 d'un même générateur solaire est assurée par des organes de liaison souples tels que des rubans 18 fixés aux extrémités adjacentes des éléments 14 pour former les charnières 16. Ces rubans 18 sont fixés aux éléments 14 sur toute la longueur des bords adjacents de ces derniers par tout moyen approprié et notamment par boulonnage, rivetage et/ou collage. Le matériau constituant les bandes 18 est un matériau souple et non extensible tel qu'une matière plastique poly mérisée permettant le déploiement des générateurs solaires tout en maintenant bord à bord les différents éléments 14 qui les constituent.

Le ruban en matière flexible 18 peut être remplacé par tout dispositif équivalent tel qu'une charnière à piano ou plusieurs bandes de liaison souples disposées sur toute la longueur de chacune des charnières 16, d'une extrémité à l'autre de l'axe de rotation de celles-ci.

Lors du lancement du satellite, les générateurs solaires 12 sont repliés contre le corps 10 du satellite, sous une précontrainte importante aplatissant chacun des éléments 14 qui les constituent. Le maintien de la précontrainte est assuré par exemple par des organes de gerbage traversant les différents éléments des générateurs, tels que des boulons explosifs.

Lorsqu'on désire réaliser le déploiement des générateurs solaires, ces organes de gerbage sont commandés à distance et leur éjection est assurée automatiquement par la précontrainte applatissant les éléments 14 des générateurs solaires.

Le déploiement de ces générateurs est ensuite assuré soit par des mouvements du satellite, soit par des moyens de motorisation associés aux charnières 16 et constitués par exemple par des ressorts de torsion.

Pendant la majeure partie du déploiement, les éléments 14 constituant les générateurs solaires restent plans et les axes de rotation définis par les charnières 16 restent rectilignes, comme l'illustre la figure 2.

Cependant, à la fin du déploiement, c'est-à-dire lorsque le générateur arrive en position déployée comme l'illustre la figure 3, les éléments 14 qui les constituent reprennent leur cambrure naturelle. Les axes de rotation des charnières 16 prennent alors une forme non rectiligne et plus précisément en arc de cercle, de sorte qu'un verrouillage automatique des générateurs solaires en position déployée est assuré. Dans ces conditions, il n'est plus possible de replier les générateurs solaires sans intervention extérieure nécessitant l'application d'un effort très important.

La courbure présentée au repos par les éléments cambrés 14 est choisie en fonction du verrouillage à assurer en fin de déploiement et de telle sorte qu'elle puisse être annulée par une déformation élastique de ces éléments. Cette courbure est également choisie afin de ne pas empêcher l'implantation sur les éléments 14 des cellules solaires (non représentées) supportées par ces éléments.

Bien entendu, l'invention n'est pas limitée au mode de réalisation qui vient d'être décrit à titre d'exemple, mais en couvre toutes les variantes.

En particulier, il est important de noter que si l'invention est particulièrement adaptée à la réalisation de générateurs solaires de satellites artificiels, cette application n'est pas limitative, l'invention permettant de réaliser tout panneau articulé formé d'au moins deux éléments approximativement plans et nécessitant un verrouillage efficace en position déployée.

Par ailleurs, si l'utilisation d'éléments cambrés, précontraints en position repliée, constitue la solution la plus simple pour déformer les axes des charnières en fin de déploiement, la déformation de ces axes peut être obtenue par des moyens différents. Parmi ces autres moyens possibles, on citera la déformation par effet bilame, sous l'action de la température, et la déformation commandée mécaniquement, par exemple au moyen d'un système de câbles.

**Revendications**

1. Panneau articulé, à verrouillage automatique en position déployée, comprenant au moins deux éléments (14) approximativement plans reliés entre eux par une charnière (16) définissant un axe de rotation entre les éléments, ce panneau étant caractérisé par le fait qu'il comprend des moyens de déformation aptes à donner audit axe, en fin de déploiement du panneau, une forme non rectiligne, irréversible sans intervention extérieure, alors que cet axe est rectiligne lorsque le panneau est replié et en cours de déploiement.

2. Panneau selon la revendication 1, caractérisé par le fait que les moyens de déformation sont constitués par les éléments approximativement plans (14) qui présentent au repos une cambrure naturelle, cette cambrure étant annulée par déformation élastique desdits éléments lorsque le panneau est en position pliée.

3. Panneau selon la revendication 2, caractérisé par le fait que la charnière (16) comprend au moins un organe de liaison souple (18) fixé sur lesdits éléments (14) pour les relier d'une extrémité à l'autre dudit axe de rotation.

4. Panneau selon la revendication 3, caractérisé par le fait que ledit organe de liaison comprend un ruban en matière flexible (18).

5. Panneau selon l'une quelconque des revendications 1 à 4, caractérisé par le fait qu'il constitue un générateur solaire déployable (12), approximativement plan.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 380 013  (SLYSH)<br>* Colonne 2, lignes 5-48; colonne 5, lignes 18-26; figures 13-15; figure 18 * | 1-5 | B 64 G    1/44 |
| | --- | | |
| A | US-A-4 666 107  (BERRY)<br>* Résumé * | 1 | |
| | ----- | | |

DOMAINES TECHNIQUES
RECHERCHES (Int. Cl.5)

B 64 G
E 04 H
E 04 B
H 01 Q
H 01 L

Le présent rapport a été établi pour toutes les revendications

| Lieu de la recherche | Date d'achèvement de la recherche | Examinateur |
|---|---|---|
| LA HAYE | 14-12-1989 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 & : membre de la même famille, document correspondant

EPO FORM 1503 03.82 (P0402)